# FASCICULE DE BREVET EUROPEEN

(11) **EP 2 918 059 B1**
(45) Date de publication et mention de la délivrance du brevet: **03.10.2018**
(21) Numéro de dépôt: 13801654.8
(22) Date de dépôt: 12.11.2013
(51) Int. Cl.: H04L 12/701, H04L 29/06

(54) **PROCÉDÉ DE TRANSMISSION D'INFORMATION DE ROUTAGE**
VERFAHREN ZUR ÜBERTRAGUNG VON ROUTING-INFORMATIONEN
METHOD FOR TRANSMITTING ROUTING INFORMATION

(30) Priorité: 12.11.2012 FR 1260726
(43) Date de publication de la demande: 16.09.2015
(73) Titulaire: Orange, 75015 Paris (FR)
(72) Inventeur: BOURNELLE, Julien, F-75012 Paris (FR); MORAND, Lionel, F-92240 Malakoff (FR)
(86) Numéro de dépôt international: PCT/FR2013/052716
(87) Numéro de publication internationale: WO 2014/072668

(56) Documents cités:
- US-A1- 2011 314 178
- DATABASE WPI Week 201129 Thomson Scientific, London, GB; AN 2011-E28061 XP002705037, -& CN 101 984 605 A (ZTE CORP) 9 mars 2011 (2011-03-09)
- CALHOUN AIRESPACE P ET AL: "Diameter Base Protocol; rfc3588.txt", 20030901, 1 septembre 2003 (2003-09-01), XP015009370, ISSN: 0000-0003

## Description

### 1. Domaine de l'invention

La demande d'invention se situe dans le domaine de l'authentification, de l'autorisation et de la taxation (AAA, pour Authentication, Autorisation and Accounting, en anglais) des utilisateurs des réseaux de communications, par les opérateurs de ces réseaux, et plus particulièrement dans le domaine du routage des requêtes AAA entre opérateurs. Plus précisément, la demande d'invention concerne le protocole AAA connu sous le nom de Diameter.

### 2. Etat de la technique antérieure

Lorsqu'un noeud de réseau conforme au protocole Diameter (RFC 3588, norme IETF) reçoit une requête, il s'appuie sur un champ de la requête indiquant le domaine de destination pour déterminer si, et à qui, il doit la transmettre. Un domaine correspond à un seul et même opérateur.

Lorsque le domaine de destination n'est pas le sien, le noeud doit transmettre la requête et consulte sa table de routage pour déterminer s'il connait un serveur desservant ce domaine de destination. Si c'est le cas, il transmet la requête à ce serveur.

S'il ne connait pas un serveur desservant le domaine de destination, le noeud transmetteur émet alors une requête DNS ("Domain Name System", système de noms de domaines, en anglais) pour trouver un noeud du domaine en question. Comme la réponse DNS donne l'adresse IP ("Internet Protocol", protocole Internet, en anglais) du noeud demandé, le noeud transmetteur est obligé de s'appuyer sur le plan de routage IP pour atteindre le prochain noeud.

On comprend que selon la technique antérieure une route entre deux noeuds est établie de proche en proche, sans qu'il soit possible d'établir à l'avance de chemin complet et précis entre les deux.

Le plan de routage IP ne permet pas au noeud transmetteur, et donc à l'opérateur de ce noeud, de contrôler par quel(s) domaine(s) la requête va transiter.

Avec la multiplication des opérateurs dans le monde et donc le nombre de domaines différents, il s'avère que le recours à des requêtes DNS est un inconvénient puisqu'il ne permet aucun contrôle sur la route prise par les messages entre noeuds. Les différents domaines de l'espace IP ne présentent en effet pas les mêmes garanties de sécurité partout, ce qui pose de graves problèmes aux opérateurs dont les services reposent sur la fiabilité et l'intégrité de la signalisation échangée entre noeuds Diameter.

La demande de brevet CN101984605A décrit un procédé d'échange d'information de routage à l'intérieur de messages d'échange de capacités de gestion.

Un des buts de l'invention est de remédier à des inconvénients de l'état de la technique.

### 3. Exposé de l'invention

L'invention est définie dans les revendications 1, 9 et 11. Des modes de réalisation particuliers sont définis dans les revendications dépendantes.

L'invention vient améliorer la situation à l'aide d'un procédé de transmission d'information de routage entre un premier et un deuxième noeuds d'une pluralité de noeuds aptes à s'échanger des données relatives à la gestion d'abonnés à des services de communications électroniques, le premier noeud et le deuxième noeud étant connectés et ayant échangé leurs capacités de gestion respectives, le procédé comprenant, lorsque les capacités de gestion supportées à la fois par le premier noeud et le deuxième noeud comprennent une capacité de découverte d'information de routage :
- déclenchée par un événement prédéterminé, une étape d'émission par le premier noeud, à destination du deuxième noeud, d'un message de découverte d'information de routage comprenant au moins une information de routage comprise dans une table de routage du premier noeud et relative à au moins un troisième noeud.

Dans un protocole AAA tel que Diameter par exemple, lorsqu'un premier noeud se connecte à un deuxième noeud à l'aide de l'adresse du deuxième noeud, les deux noeuds s'échangent certaines informations relatives à leurs capacités de gestion respectives, c'est-à-dire, par exemple, quelles applications d'authentification, d'autorisation et de taxation ils supportent. Ceci leur permet de savoir s'ils partagent une capacité de découverte, c'est-à-dire si, parmi les types de messages du protocole en question dont l'échange est possible entre eux, se trouve un type de messages relatifs à leur table de routage respective. Ainsi, grâce à l'invention, le premier noeud fait découvrir au deuxième noeud des informations comprises dans sa table de routage. Ces informations peuvent par exemple être relatives à un ou plusieurs autres noeuds déjà connectés au premier noeud.

Un protocole tel que Diameter selon la technique antérieure, repose sur le routage par nom de domaine, afin de pouvoir justement recourir à des requêtes DNS pour découvrir une adresse de noeud Diameter lorsqu'elle n'est pas présente dans une table de routage. Le protocole Diameter selon la technique antérieure ne prévoit donc pas de mécanisme autre que la requête DNS pour permettre à un noeud Diameter de mettre à jour sa table de routage avec de nouvelles adresses. Les seules informations de routage d'une table de routage qui ne soient pas le produit de requêtes DNS sont celles renseignées à l'initialisation, concernant en général des noeuds immédiatement voisins.

Allant à l'encontre du parti pris de la technique antérieure, le procédé selon l'invention permet à une table de routage de se propager d'un noeud à un autre lorsqu'ils sont connectés, limitant ainsi le recours ultérieur à des requêtes DNS.

Selon un aspect de l'invention, l'événement déclencheur est la connexion du premier noeud avec le deuxième noeud, le message de découverte d'information de routage est un message de requête de découverte, et l'étape d'émission est en outre suivie des étapes suivantes:
- une étape de réception par le premier noeud, en provenance du deuxième noeud, d'un message de réponse de découverte comprenant au moins une information de routage comprise dans une table de routage du deuxième noeud,
- une étape d'enrichissement de la table de routage du premier noeud par mémorisation de l'au moins une information de routage reçue.

Grâce à l'étape de réception d'un message de réponse, où le deuxième noeud fait découvrir à son tour au premier noeud des informations relatives à des noeuds qui lui sont connectés, par exemple un quatrième noeud, le premier noeud peut les mémoriser dans sa table de routage lors de l'étape d'enrichissement. Les tables de routage des premier et deuxième noeuds peuvent ainsi être identiques.

Cela permet, par exemple, si le premier noeud doit, à un moment ultérieur, s'adresser au quatrième noeud, il aura les mêmes capacités que le deuxième noeud pour le faire, sans avoir recours à une requête DNS, seule possibilité selon la technique antérieure. De plus, il pourra atteindre ce quatrième noeud en utilisant une route passant par le deuxième noeud, ce qui présente l'avantage de n'emprunter que des liens de confiance.

Selon un aspect de l'invention, le message de découverte d'information de routage est un message de réponse de découverte, l'événement déclencheur est la réception d'un message de requête de découverte en provenance du deuxième noeud comprenant au moins une information de routage comprise dans une table de routage du deuxième noeud, et le procédé comprend en outre :
- une étape d'enrichissement de la table de routage du premier noeud par mémorisation de l'au moins une information de routage reçue.

Grâce à cet aspect, les mêmes avantages sont obtenus lorsque le deuxième noeud a l'initiative de l'échange d'information de routage, que lorsque c'est le premier noeud.

Selon un aspect de l'invention, l'événement déclencheur est l'enrichissement de la table de routage du premier noeud par au moins une information de routage reçue d'un cinquième noeud.

Grâce à cet aspect, le premier noeud fait découvrir au deuxième noeud des informations comprises dans sa table de routage non pas lorsqu'il se connecte avec lui, mais par exemple lorsqu'il se connecte avec un cinquième noeud. Ainsi, la table de routage du deuxième noeud est mise à jour lorsqu'une modification est apportée à celle du premier noeud, la modification pouvant être causée par sa connexion avec un cinquième noeud.

Cela permet au deuxième noeud de disposer des mêmes informations que le premier noeud pour s'adresser ultérieurement à ce cinquième noeud ou à tout autre noeud, même si le premier noeud n'était pas connecté au cinquième noeud au moment où les premier et deuxième noeuds se sont connectés. Par exemple, il pourra atteindre ce cinquième noeud en utilisant une route passant par le premier noeud, ce qui présente l'avantage de n'emprunter que des liens de confiance.

Selon un aspect de l'invention, l'information de routage relative à un noeud comprend:
- un identifiant du noeud,
- un identifiant du domaine du noeud.

Grâce à cet aspect, une table de routage est en mesure de construire des routes entre noeuds en fonction des domaines des noeuds, permettant ainsi à un opérateur de contrôler exactement le routage de ses requêtes vers un autre opérateur.

Par exemple, le premier noeud peut ainsi router une requête Diameter vers le quatrième noeud en passant par le deuxième noeud. De cette façon, l'opérateur du premier domaine est assuré que ses requêtes vers le quatrième domaine empruntent un lien entre le premier et le deuxième domaine auquel il fait confiance car il fait confiance au deuxième opérateur, et un lien entre le deuxième et le quatrième domaine, auquel il peut a priori faire confiance car le deuxième opérateur fait confiance au quatrième opérateur.

Selon un aspect de l'invention, l'information de routage relative à un noeud comprend en outre:
- une liste de capacités de gestion supportées par le noeud,
- un type de noeud, par capacité de gestion supportée.

Grâce à cet aspect, une table de routage est en mesure de construire des routes entre noeuds non seulement en fonction des domaines des noeuds mais aussi en fonction des applications supportées par noeud, permettant ainsi à un opérateur de contrôler plus précisément le routage de ses requêtes vers un autre opérateur.

Par exemple, le premier noeud peut vouloir s'assurer que les noeuds situés entre le premier et le quatrième supportent à la fois des fonctions d'authentification spécifiques, à l'aide d'une application d'authentification, et des fonctions de taxation spécifiques, à l'aide d'une application de taxation, afin que ses requêtes pour les applications d'authentification et de taxation empruntent la même route.

Un noeud de type "relay" transfère une requête sans la modifier et reste dans la route de signalisation, notamment pour la réponse. Un noeud de type "redirect" renvoie immédiatement une réponse à l'émetteur en indiquant le prochain noeud à qui envoyer de nouveau la requête, et ne reste donc pas dans la route de signalisation. Un noeud de type "proxy" peut modifier le contenu d'une requête. Par exemple, s'il en a la possibilité, le premier noeud peut préférer une route ne passant que par des noeuds "relay", et évitant des noeuds de type "proxy" ou "redirect".

Selon un aspect de l'invention, l'information de routage relative à un noeud comprend en outre:
- une information relative à la fonction supportée par le noeud, par capacité de gestion supportée.

Grâce à cet aspect, une table de routage est en mesure de construire des routes entre noeuds non seulement en fonction des domaines des noeuds, en fonction des applications supportées par noeud, ou en fonction des types de noeud Diameter, mais aussi en fonction du type d'équipement mettant en oeuvre le noeud Diameter. Cet équipement peut être un équipement du réseau tel qu'un serveur SIP ("Session Initiation Protocol", protocole d'initiation de session, en anglais), et se servir du protocole Diameter pour transporter des informations relatives à un autre protocole, tel que par exemple SIP.

Ainsi, cette information relative à la fonction supportée par le noeud est une information supplémentaire utilisable par la table de routage pour construire des routes entre des serveurs SIP, par exemple.

Selon un aspect de l'invention, le message de découverte d'information de routage comprend un champ au format XML comprenant l'au moins une information de routage.

Grâce à cet aspect, le protocole Diameter n'a besoin de prévoir exactement ni la taille ni le nombre de champs dans les messages de découverte d'information de routage, qui sont très variables en fonction du nombre de noeuds renseignés dans une table de routage.

Selon un aspect de l'invention, ladite au moins une information de routage comprise dans le message de découverte d'information de routage est relative à au moins un troisième noeud auquel le premier noeud est connecté.

Grâce à cet aspect, le premier noeud transmet à un deuxième noeud auquel il a été préalablement connecté des informations relatives à un autre noeud, uniquement si cet autre noeud est directement connecté au premier noeud. Il ne transmet donc pas d'informations relatives à des noeuds éventuellement connectés à cet autre noeud, mais non connectés au premier noeud, même si ces informations sont comprises dans la table de routage du premier noeud. Ceci permet de limiter le volume des messages de découverte d'information de routage, ainsi que la taille des tables de routage.

Les différents aspects du procédé qui viennent d'être décrits peuvent être mis en oeuvre indépendamment les uns des autres ou en combinaison les un avec les autres.

L'invention concerne aussi un dispositif de transmission d'information de routage entre un premier et un deuxième noeuds d'une pluralité de noeuds aptes à s'échanger des données relatives à la gestion d'abonnés à des services de communications électroniques, le premier noeud et le deuxième noeud étant connectés et ayant échangé leur capacités de gestion respectives, le dispositif comprenant un module d'émission par le premier noeud, à destination du deuxième noeud, d'un message de découverte comprenant au moins une information de routage comprise dans une table de routage du premier noeud et relative à au moins un troisième noeud.

Ce dispositif met en oeuvre le procédé de transmission d'information de routage qui vient d'être décrit.

Un tel dispositif peut être mis en oeuvre dans un équipement spécialisé dans le routage de la signalisation Diameter, tel que le "Diameter Edge Agent" défini par la norme 3GPP (3rd Generation Partnership Project, projet de partenariat de troisième génération, en anglais), ou tout agent Diameter spécialisé, tel que le "Diameter Routing Function". Le dispositif peut également être mis en oeuvre dans des noeuds de réseau de type "Home Subscriber Server" (HSS, serveur d'attache d'abonné, en anglais), ou de type "Policy Control and Charging Rules Function" (PCRF, fonction des règles de politique et de comptage, en anglais), ou dans un serveur AAA.

L'invention concerne aussi un équipement de gestion d'un réseau de télécommunication, apte à recevoir des messages de requête et à émettre des messages de réponse relatifs à l'authentification, l'autorisation et la taxation d'abonnés à des services de communications électroniques, comprenant un dispositif tel que celui qui vient d'être décrit.

Un tel équipement de gestion peut être par exemple un "Diameter Edge Agent" ou tout agent Diameter spécialisé, tel que le "Diameter Routing Function", un noeud de réseau de type "Home Subscriber Server", ou de type "Policy Control and Charging Rules Function", ou un serveur AAA.

L'invention concerne aussi un signal portant un message de requête de découverte destiné à un équipement de gestion apte à recevoir un message de requête relatif à la gestion d'abonnés à des services de communications électroniques, le message comprenant au moins une information de routage comprise dans la table de routage d'un autre équipement de gestion apte à émettre un message de requête relatif à la gestion d'abonnés à des services de communications électroniques, et en ce qu'il est émis par cet autre équipement.

Selon un aspect de l'invention, le signal portant un message de requête de découverte comprend en outre une indication sur le type du message de requête de découverte.

Grâce à cet aspect, l'équipement de gestion apte à recevoir le message de requête est capable de distinguer entre plusieurs types de messages de requête de découverte. Par exemple, si le message est de type "création", c'est-à-dire si l'envoi du message de requête est déclenché par la connexion du noeud émetteur avec le noeud récepteur, un message de réponse de découverte devra être émis en retour. Si le message est de type "mise à jour", c'est-à-dire si l'envoi du message de requête est déclenché par la connexion du noeud émetteur avec un noeud autre que le noeud récepteur, aucun message de réponse de découverte ne sera émis.

Ceci permet notamment d'éviter l'émission de messages de réponse de découverte inutiles.

L'invention concerne aussi un signal portant un message de réponse de découverte destiné à un équipement de gestion apte à recevoir un message de réponse relatif à la gestion d'abonnés à des services de communications électroniques, le message comprenant au moins une information de routage comprise dans la table de routage d'un autre équipement de gestion apte à émettre un message de réponse relatif à la gestion d'abonnés à des services de communications électroniques, et en ce qu'il est émis par cet autre équipement en réponse à un message de requête de découverte.

L'invention concerne aussi un programme d'ordinateur comprenant des instructions pour la mise en oeuvre des étapes du procédé de transmission d'information de routage qui vient d'être décrit, lorsque ce procédé est exécuté par un processeur.

L'invention concerne enfin un support d'enregistrement lisible par un équipement de gestion sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un premier, un deuxième et un troisième équipement de gestion mettant en oeuvre le procédé de transmission d'information de routage, selon l'invention,
- la figure 2 présente un exemple de mise en oeuvre du procédé de transmission d'information de routage, selon un premier et un deuxième mode de réalisation de l'invention,
- la figure 3 présente un exemple de structure d'un dispositif de transmission d'information de routage, selon un aspect de l'invention.

### 5. Description détaillée d'au moins un mode de réalisation de l'invention

Dans la suite de la description, on présente des exemples de plusieurs modes de réalisation de l'invention se basant sur le protocole Diameter, mais l'invention s'applique également à d'autres protocoles, tel que le protocole RADIUS, ou tout protocole, qu'il soit AAA ou non, utilisé dans tout système de signalisation pour réseau de communication électronique tel que par exemple SIP.

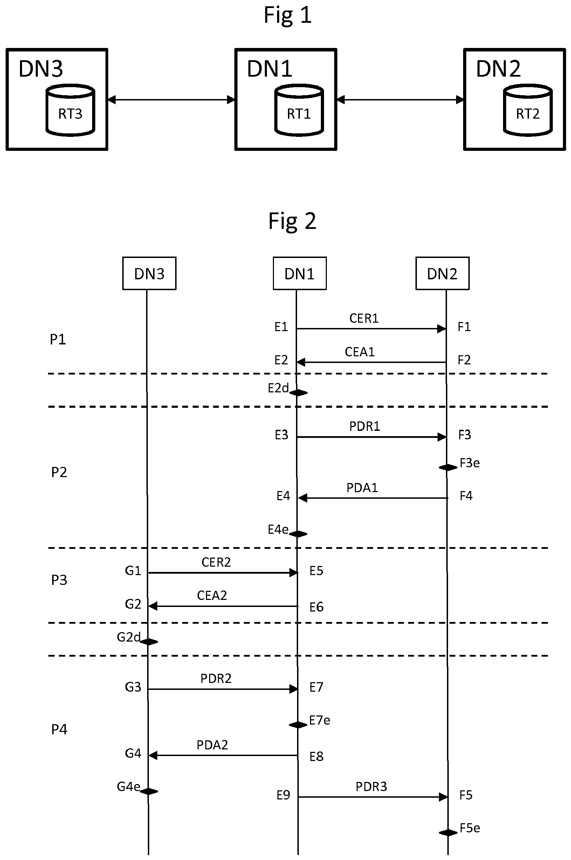

La **figure 1** présente de façon schématique un premier, un deuxième et un troisième équipement de gestion mettant en oeuvre le procédé de transmission d'information de routage, selon l'invention.

Les équipements de gestion DN1, DN2 et DN3 sont par exemple des noeuds de réseau conformes au protocole Diameter, comprenant respectivement une table de routage RT1, RT2, RT3. La table de routage RT1 du noeud DN1, selon l'invention, comprend par exemple les informations suivantes, pour chacun des domaines connus du noeud DN1, y compris le domaine du noeud DN1 :

| | |
|---|---|
| "Realm Name" | Nom du domaine; champ utilisé comme clé principale de recherche dans la table de routage |
| "Application Identifier" | Identifiant de l'application supportée par le domaine; champ utilisé comme clé secondaire de recherche dans la table de routage |
| "Local Action" | Action locale; indique le type de noeud Diameter (local, relay, proxy, ou redirect) |
| "Server Identifier" | Identifiant de serveur; indique le ou les serveurs (noeud Diameter) du domaine vers lesquels un message est routé |
| "Static or Dynamic" | Statique ou dynamique; indique comment la ou les routes ont été configurées |
| "Expiration Time" | Expiration; indique la date/heure après laquelle la ou les routes configurées dynamiquement cessent d'être valide |
| "Routing Paths" | Route(s) possible(s) vers le domaine |

Selon l'invention, un premier noeud DN1 et un deuxième noeud DN2 s'échangent des informations comprises dans leur table de routage respectives RT1 et RT2, lorsqu'ils se connectent l'un à l'autre. Selon l'invention, lorsqu'un troisième noeud DN3 se connecte ensuite au premier noeud DN1, non seulement les noeuds DN3 et DN1 s'échangent des informations comprises dans leur table de routage respectives RT3 et RT1, mais le premier noeud DN1 transmet au deuxième noeud DN2 des informations obtenues du noeud DN3.

Ainsi, les informations comprises dans les tables de routage des noeuds Diameter se propagent d'un noeud à l'autre, limitant la probabilité de devoir recourir à une requête DNS lorsqu'un noeud d'un domaine particulier doit atteindre un noeud d'un autre domaine.

La **figure 2** présente un exemple de mise en oeuvre du procédé de transmission d'information de routage, selon un premier et un deuxième mode de réalisation de l'invention.

Les phases P1 et P2 illustrent un exemple du **premier mode de réalisation,** dans lequel il est supposé que la table de routage du noeud DN1 comprend des informations relatives à un noeud DN3, que la table de routage du noeud DN2 comprend des informations relatives à un noeud DN4, et que les noeuds DN1 et DN2 ne sont pas initialement connectés l'un à l'autre.

Lors d'une phase connue, P1, de connexion, comprenant les étapes E1, E2, F1 et F2, le noeud DN1 se connecte au noeud DN2. L'adresse du noeud DN2 a été préalablement obtenue par le noeud DN1 de façon connue, soit par configuration manuelle de la table de routage de DN1, soit par une requête DNS. De façon connue, la procédure de connexion selon Diameter comprend un échange des capacités de gestions par des messages dits CER1, pour "Capacity Exchange Request" (requête d'échange de capacités, en anglais) et CEA1, pour "Capacity Exchange Answer" (réponse d'échange de capacités, en anglais).

Lors de l'étape E1, le noeud DN1 émet à destination du noeud DN2 le message CER1. Le message CER1 reçu par le noeud DN2 lors de l'étape F1, comprend à la fois une information relative aux capacités de gestion du noeud DN1, et une requête pour l'information correspondante de la part du noeud destinataire. Lors de l'étape F2, le noeud DN2 émet en réponse, à destination du noeud DN1, le message CEA1. Le message CEA1, reçu par le noeud DN1 lors de l'étape E2, comprend une information relative aux capacités de gestion du noeud DN2.

Lors d'une étape E2d intermédiaire entre les phases P1 et P2, le noeud DN1 détermine que les capacités de gestions communes entre les noeuds DN1 et DN2 comprennent une capacité de découverte d'information de routage.

Lors d'une phase P2 de découverte de route, comprenant les étapes E3, E4, E4e, F3, F3e et F4, des informations comprises dans les tables de routages des noeuds DN1 et DN2 sont échangées.

Lors de l'étape E3 déclenchée par l'établissement de la connexion entre le noeud DN1 et le noeud DN2, le noeud DN1 émet à destination du noeud DN2 un message de requête de découverte dit PDR1, pour "Path Discovery Request" (requête de découverte de route, en anglais). Ce message PDR1, d'une part, comprend des informations de la table de routage du noeud DN1, par exemple des informations relatives à au moins un troisième noeud DN3, et d'autre part, indique au noeud DN2 que le noeud DN1 attend en retour des informations de la table de routage du noeud DN2.

Le message PDR1 est reçu par le noeud DN2 lors de l'étape F3.

Lors d'une étape F3e, le noeud DN2 enrichit sa table de routage en y mémorisant des informations obtenues lors de l'étape F3, dont par exemple des informations relatives au noeud DN3.

Lors de l'étape F4, le noeud DN2 émet à destination du noeud DN1 un message de réponse de découverte dit PDA1, pour "Path Discovery Answer" (réponse de découverte de route, en anglais). Ce message PDA1 comprend des informations de la table de routage du noeud DN2, dont par exemple des informations relatives à au moins un quatrième noeud DN4.

Le message PDA1 est reçu par le noeud DN1 lors de l'étape E4.

Lors d'une étape E4e, le noeud DN1 enrichit sa table de routage en y mémorisant des informations obtenues lors de l'étape E4, dont par exemple des informations relatives au noeud DN4.

Ainsi, grâce au procédé de transmission d'information de routage, le noeud DN1 saura à l'avenir comment atteindre le noeud DN4 sans avoir recours à une requête DNS.

De même, le noeud DN2 saura à l'avenir comment atteindre le noeud DN3 sans avoir recours à une requête DNS.

Dans une **variante** de ce premier mode de réalisation, lors de la phase P2 de découverte de route, c'est le noeud DN2 qui est à l'initiative d'un message de requête de découverte PDR1b, et c'est le noeud DN1 qui répond par un message de réponse de découverte PDA1b. Ce message PDR1b, d'une part, comprend des informations de la table de routage du noeud DN2, par exemple des informations relatives à au moins un quatrième noeud DN4, et d'autre part, indique au noeud DN1 que le noeud DN2 attend en retour des informations de la table de routage du noeud DN1. Le message de réponse de découverte PDA1 comprend des informations de la table de routage du noeud DN1, dont par exemple des informations relatives à au moins un troisième noeud DN3.

On comprend que dans cette variante les deux étapes d'enrichissement de table de routage restent les mêmes mais dans un autre ordre chronologique, et que le résultat final est le même, c'est-à-dire que le noeud DN1 saura à l'avenir comment atteindre le noeud DN4 sans avoir recours à une requête DNS, et que le noeud DN2 saura à l'avenir comment atteindre le noeud DN3 sans avoir recours à une requête DNS.

Les phases P3 et P4 illustrent un exemple du **deuxième mode de réalisation,** dans lequel il est supposé que les noeuds DN1 et DN2 sont préalablement connectés l'un à l'autre, et que la table de routage du noeud DN1 ne comprend pas initialement d'informations relatives ni à un noeud DN3, ni à un noeud DN5.

Lors d'une phase connue, P3, de connexion, comprenant les étapes G1, G2, E5 et E6, le noeud DN3 se connecte au noeud DN1. L'adresse du noeud DN1 a été préalablement obtenue par le noeud DN3 de façon connue, soit par configuration manuelle de la table de routage de DN3, soit par une requête DNS. De façon connue, la procédure de connexion selon Diameter comprend un échange des capacités de gestions par des messages dits CER2 et CEA2. Les étapes G1, G2, E5 et E6 sont similaires respectivement aux étapes E1, E2, F1, et F2 de la phase P1, et n'ont pas besoin d'être réexpliquées.

Lors d'une étape G2d intermédiaire entre les phases P3 et P4, le noeud DN3 détermine que les capacités de gestions communes entre les noeuds DN3 et DN1 comprennent une capacité de découverte d'information de routage.

Lors d'une phase P4 de découverte de route, comprenant les étapes G3, G4, G4e, E7, E7e, E8, E9, F5 et F5e, des informations comprises dans les tables de routages des noeuds DN3 et DN1 et DN2 sont échangées.

Lors de l'étape G3 déclenchée par l'établissement de la connexion entre le noeud DN3 et le noeud DN1, le noeud DN3 émet à destination du noeud DN1 un message de requête de découverte dit PDR2. Ce message PDR2, d'une part, comprend des informations de la table de routage du noeud DN3, par exemple des informations relatives à au moins un cinquième noeud DN5, et d'autre part, indique au noeud DN1 que le noeud DN3 attend en retour des informations de la table de routage du noeud DN1.

Le message PDR2 est reçu par le noeud DN1 lors de l'étape E7.

Lors d'une étape E7e, le noeud DN1 enrichit sa table de routage en y mémorisant des informations obtenues lors de l'étape E7, dont par exemple des informations relatives au noeud DN5.

Lors de l'étape E8, le noeud DN1 émet à destination du noeud DN3 un message de réponse de découverte dit PDA2. Ce message PDA2 comprend des informations de la table de routage du noeud DN1, dont par exemple des informations relatives à au moins le deuxième noeud DN2.

Le message PDA2 est reçu par le noeud DN3 lors de l'étape G4.

Lors d'une étape G4e, le noeud DN3 enrichit sa table de routage en y mémorisant des informations obtenues lors de l'étape G4, dont par exemple des informations relatives au noeud DN2.

Ainsi, le noeud DN3 saura à l'avenir comment atteindre le noeud DN2 sans avoir recours à une requête DNS.

De même, le noeud DN1 saura à l'avenir comment atteindre le noeud DN5 sans avoir recours à une requête DNS.

Lors d'une étape E9 déclenchée par l'enrichissement lors de l'étape E7e de la table de routage du noeud DN1, le noeud DN1 émet à destination du noeud DN2 un message de requête de découverte dit PDR3. Ce message PDR3, d'une part, comprend des informations de la table de routage du noeud DN1, par exemple des informations relatives à au moins le troisième noeud DN3 et le cinquième noeud DN5, et d'autre part, indique au noeud DN2 que le noeud DN1 n'attend pas en retour des informations de la table de routage du noeud DN2, puisqu'il les a déjà obtenues préalablement.

Il est à noter que le noeud DN1 a préalablement déterminé, suite à sa connexion avec le noeud DN2, que les capacités de gestions communes entre les noeuds DN1 et DN2 comprennent une capacité de découverte d'information de routage, et donc qu'il peut émettre vers le noeud DN2 un tel message PDR3.

Le message PDR3 est reçu par le noeud DN2 lors de l'étape F5.

Lors d'une étape F5e, le noeud DN2 enrichit sa table de routage en y mémorisant des informations obtenues lors de l'étape F5, dont par exemple des informations relatives au noeud DN3 et au noeud DN5.

Ainsi, grâce au procédé de transmission d'information de routage, le noeud DN2 saura à l'avenir comment atteindre le noeud DN3 ou le noeud DN5 sans avoir recours à une requête DNS, et sans qu'il n'existe de connexion préalablement établie entre les noeuds DN2 et DN3. C'est l'enrichissement de la table de routage du noeud DN1, préalablement connecté au noeud DN2, qui déclenche les étapes menant à l'enrichissement de la table de routage du noeud DN2.

Dans un **troisième mode de réalisation** de l'invention, non illustré, les messages de découvertes PDR ou PDA entre deux noeuds ne comprennent que des informations relatives à eux-mêmes ou à des noeuds avec lesquels ils sont préalablement connectés.

Par exemple, lors de la phase P4 de découverte de route, étape E9, décrite en relation avec la figure 2, le message PDR3 ne comprend que des informations de la table de routage du noeud DN1 relatives à des noeuds connectés à DN1, c'est-à-dire le noeud DN3, mais pas d'informations relatives à des noeuds non-connectés à DN1, c'est-à-dire le noeud DN5.

Ceci présente l'avantage de limiter le volume des informations transmises, et donc la taille des messages PDR et PDA. En effet, ces messages peuvent être nombreux si le nombre total de noeuds Diameter des différents domaines est élevé, et il peut être nécessaire de limiter leur taille afin de ne pas surcharger les réseaux.

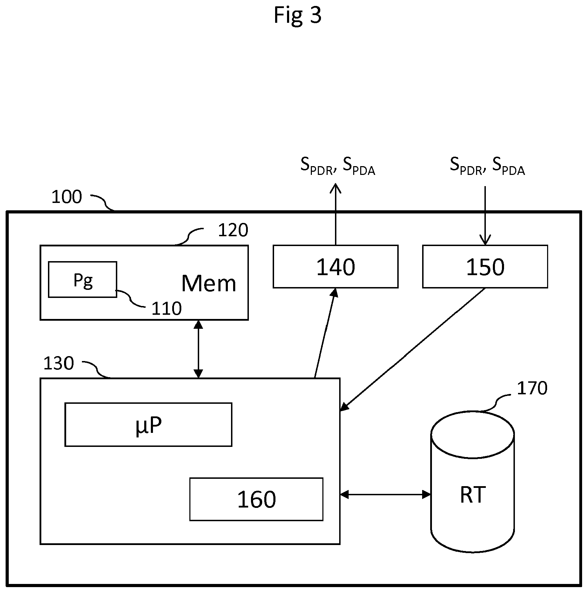

En relation avec la **figure 3****,** on présente maintenant un exemple de structure d'un dispositif de transmission d'information de routage, selon un aspect de l'invention.

Le dispositif 100 de transmission d'information de routage met en oeuvre le procédé de transmission d'information de routage, dont différents modes de réalisation viennent d'être décrits.

Un tel dispositif 100 peut être mis en oeuvre dans un équipement spécialisé dans le routage de la signalisation Diameter, tel que le "Diameter Edge Agent" défini par la norme 3GPP (3rd Generation Partnership Project, projet de partenariat de troisième génération, en anglais), ou tout agent Diameter spécialisé, tel que le "Diameter Routing Function". Le dispositif 100 peut également être mis en oeuvre dans des noeuds de réseau de type "Home Subscriber Server" (HSS, serveur d'attache d'abonné, en anglais), ou de type "Policy Control and Charging Rules Function" (PCRF, fonction des règles de politique et de comptage, en anglais), ou dans un serveur AAA.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé de transmission d'information de routage selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module d'émission 140, apte à émettre un signal (S_{PDR}) portant un message de requête de découverte ou un signal (S_{PDA}) portant un message de réponse de découverte, à destination d'un autre équipement de gestion équipé d'un dispositif 100,
- un module de réception 150, apte à recevoir un signal (S_{PDR}) portant un message de requête de découverte ou un signal (S_{PDA}) portant un message de réponse de découverte, en provenance d'un autre équipement de gestion équipé d'un dispositif 100,

Avantageusement, l'unité de traitement 130 peut comprendre:
- un module d'enrichissement 160, apte à enrichir une table de routage 170 par mémorisation d'informations de routage reçues dans un message de requête de découverte ou dans un message de réponse de découverte.

Les modules décrits en relation avec la figure 3 peuvent être des modules matériels ou logiciels.

Les exemples de réalisation de l'invention qui viennent d'être présentés ne sont que quelques uns des modes de réalisation envisageables. Ils montrent que l'invention permet à un opérateur de réseau, en limitant, voire en éliminant le recours à des requêtes DNS, d'exercer des choix préférentiels sur le routage de messages de signalisation relatifs à la gestion d'abonnés à des services de communications électroniques.

## Revendications

1. **Procédé** de transmission d'information de routage entre un premier (DN1) et un deuxième (DN2) noeuds d'une pluralité de noeuds aptes à s'échanger des données relatives à la gestion d'abonnés à des services de communications électroniques, le premier noeud et le deuxième noeud étant connectés et ayant échangé (E1, E2) par des messages dédiés (CER1, CEA1) leurs capacités de gestion respectives, le procédé étant **caractérisé en ce qu'**il comprend, lorsque les messages dédiés comprennent une information relative à une capacité de découverte d'information de routage :
• déclenchée par un événement prédéterminé, une étape (E3, E9) d'émission par le premier noeud, à destination du deuxième noeud, d'un message (PDR1, PDR3) de découverte d'information de routage comprenant au moins une information de routage comprise dans une table de routage (RT1) du premier noeud et relative à au moins un troisième noeud.

2. **Procédé** selon la revendication 1, **caractérisé en ce que** l'événement déclencheur est la connexion du premier noeud (DN1) avec le deuxième noeud (DN2), **en ce que** le message de découverte d'information de routage est un message de requête de découverte, et **en ce que** l'étape (E3) d'émission est en outre suivie des étapes suivantes:
• une étape (E4) de réception par le premier noeud, en provenance du deuxième noeud, d'un message (PDA1) de réponse de découverte comprenant au moins une information de routage comprise dans une table de routage (RT2) du deuxième noeud,
• une étape (E4e) d'enrichissement de la table de routage (RT1) du premier noeud par mémorisation de l'au moins une information de routage reçue.

3. **Procédé** selon la revendication 1, **caractérisé en ce que** le message de découverte d'information de routage est un message de réponse de découverte et **en ce que** l'événement déclencheur est la réception d'un message de requête de découverte en provenance du deuxième noeud comprenant au moins une information de routage comprise dans une table de routage du deuxième noeud, et **en ce que** le procédé comprend en outre :
• une étape d'enrichissement de la table de routage du premier noeud par mémorisation de l'au moins une information de routage reçue.

4. **Procédé** selon la revendication 1, **caractérisé en ce que** l'événement déclencheur est l'enrichissement (E7e) de la table de routage (RT1) du premier noeud (DN1) par au moins une information de routage reçue d'un cinquième noeud.

5. **Procédé** selon la revendication 1, **caractérisé en ce que** l'information de routage relative à un noeud comprend:
• un identifiant du noeud,
• un identifiant du domaine du noeud.

6. **Procédé** selon la revendication 5, **caractérisé en ce que** l'information de routage relative à un noeud comprend en outre:
• une liste de capacités de gestion supportées par le noeud,
• un type de noeud, par capacité de gestion supportée.

7. **Procédé** selon l'une des revendications précédentes, **caractérisé en ce que** le message de découverte d'information de routage comprend un champ au format XML comprenant l'au moins une information de routage.

8. **Procédé** selon la revendication 1, **caractérisé en ce que** ladite au moins une information de routage comprise dans le message de découverte d'information de routage est relative à au moins un troisième noeud auquel le premier noeud est connecté.

9. **Dispositif** de transmission d'information de routage entre un premier (DN1) et un deuxième (DN2) noeuds d'une pluralité de noeuds aptes à s'échanger des données relatives à la gestion d'abonnés à des services de communications électroniques, le premier noeud (DN1) et le deuxième noeud (DN2) étant connectés et ayant échangé par des messages dédiés (CER1, CEA1) leur capacités de gestion respectives, le dispositif étant **caractérisé en ce qu'**il comprend un module (140) d'émission par le premier noeud (DN1), à destination du deuxième noeud (DN2), d'un message de découverte d'information de routage (PDR1, PDR3) comprenant au moins une information de routage comprise dans une table de routage (RT1) du premier noeud (DN1) et relative à au moins un troisième noeud, lorsque les messages dédiés comprennent une information relative à une capacité de découverte d'information de routage.

10. **Equipement de gestion** d'un réseau de télécommunication, apte à recevoir des messages de requête et à émettre des messages de réponse relatifs à l'authentification, l'autorisation et la taxation d'abonnés à des services de communications électroniques, **caractérisé en ce qu'**il comprend un dispositif selon la revendication 9.

11. **Programme d'ordinateur, caractérisé en ce qu'**il comprend des instructions pour la mise en oeuvre des étapes du procédé de transmission d'information de routage selon la revendication 1, lorsque ce procédé est exécuté par un processeur.

12. **Support d'enregistrement** lisible par un équipement de gestion sur lequel est enregistré le programme selon la revendication 11.

## Patentansprüche

1. Verfahren zur Übertragung von Routinginformationen zwischen einem ersten (DN1) und einem zweiten (DN2) Knoten von mehreren Knoten, die in der Lage sind, miteinander Daten auszutauschen, welche sich auf die Verwaltung von Teilnehmern elektronischer Kommunikationsdienste beziehen, wobei der erste Knoten und der zweite Knoten verbunden sind und durch dedizierte Nachrichten (CER1, CEA1) ihre jeweiligen Verwaltungsfähigkeiten ausgetauscht haben (E1, E2), wobei das Verfahren **dadurch gekennzeichnet ist, dass** es umfasst, wenn die dedizierten Nachrichten eine Information umfassen, die sich auf eine Fähigkeit zur Entdeckung von Routinginformationen bezieht:
• Auslösung, durch ein vorbestimmtes Ereignis, eines Schrittes (E3, E9) des Sendens, durch den ersten Knoten an den zweiten Knoten, einer Routinginformations-Entdeckungsnachricht (PDR1, PDR3), die wenigstens eine Routinginformation umfasst, die in einer Routingtabelle (RT1) des ersten Knotens enthalten ist und sich auf wenigstens einen dritten Knoten bezieht.

2. Verfahren nach Anspruch 1, **dadurch gekennzeichnet, dass** das auslösende Ereignis die Verbindung des ersten Knotens (DN1) mit dem zweiten Knoten (DN2) ist, dadurch, dass die Routinginformations-Entdeckungsnachricht eine Entdeckungsanforderungsnachricht ist, und dadurch, dass auf den Schritt (E3) des Sendens außerdem die folgenden Schritte folgen:
• ein Schritt (E4) des Empfangs, durch den ersten Knoten, einer Entdeckungsantwortnachricht (PDA1), vom zweiten Knoten gesendet, die wenigstens eine Routinginformation umfasst, die in einer Routingtabelle (RT2) des zweiten Knotens enthalten ist,
• ein Schritt (E4e) der Vervollständigung der Routingtabelle (RT1) des ersten Knotens durch Speicherung der empfangenen wenigstens einen Routinginformation.

3. Verfahren nach Anspruch 1, **dadurch gekennzeichnet, dass** die Routinginformations-Entdeckungsnachricht eine Entdeckungsantwortnachricht ist, und dadurch, dass das auslösende Ereignis der Empfang einer Entdeckungsanforderungsnachricht von dem zweiten Knoten ist, die wenigstens eine Routinginformation umfasst, die in einer Routingtabelle des zweiten Knotens enthalten ist, und dadurch, dass das Verfahren außerdem umfasst:
• einen Schritt der Vervollständigung der Routingtabelle des ersten Knotens durch Speicherung der empfangenen wenigstens einen Routinginformation.

4. Verfahren nach Anspruch 1, **dadurch gekennzeichnet, dass** das auslösende Ereignis die Vervollständigung (E7e) der Routingtabelle (RT1) des ersten Knotens (DN1) durch wenigstens eine Routinginformation ist, die von einem fünften Knoten empfangen wurde.

5. Verfahren nach Anspruch 1, **dadurch gekennzeichnet, dass** die sich auf einen Knoten beziehenden Routinginformationen umfassen:
• eine Kennung des Knotens,
• eine Kennung der Domäne des Knotens.

6. Verfahren nach Anspruch 5, **dadurch gekennzeichnet, dass** die sich auf einen Knoten beziehenden Routinginformationen außerdem umfassen:
• eine Liste von Verwaltungsfähigkeiten, die von dem Knoten unterstützt werden,
• einen Knotentyp, nach unterstützter Verwaltungsfähigkeit.

7. Verfahren nach einem der vorhergehenden Ansprüche, **dadurch gekennzeichnet, dass** die Routinginformations-Entdeckungsnachricht ein Feld im XML-Format umfasst, das wenigstens eine Routinginformation umfasst.

8. Verfahren nach Anspruch 1, **dadurch gekennzeichnet, dass** die wenigstens eine Routinginformation, die in der Routinginformations-Entdeckungsnachricht enthalten ist, sich auf wenigstens einen dritten Knoten bezieht, mit dem der erste Knoten verbunden ist.

9. Vorrichtung zur Übertragung von Routinginformationen zwischen einem ersten (DN1) und einem zweiten (DN2) Knoten von mehreren Knoten, die in der Lage sind, miteinander Daten auszutauschen, welche sich auf die Verwaltung von Teilnehmern elektronischer Kommunikationsdienste beziehen, wobei der erste Knoten und der zweite Knoten verbunden sind und durch dedizierte Nachrichten (CER1, CEA1) ihre jeweiligen Verwaltungsfähigkeiten ausgetauscht haben, wobei die Vorrichtung **dadurch gekennzeichnet ist, dass** sie ein Modul (140) zum Senden, durch den ersten Knoten an den zweiten Knoten, wenn die dedizierten Nachrichten eine Information umfassen, die sich auf eine Fähigkeit zur Entdeckung von Routinginformationen bezieht, einer Routinginformations-Entdeckungsnachricht (PDR1, PDR3) umfasst, die wenigstens eine Routinginformation umfasst, die in einer Routingtabelle (RT1) des ersten Knotens (DN1) enthalten ist und sich auf wenigstens einen dritten Knoten bezieht.

10. Verwaltungseinrichtung eines Telekommunikationsnetzes, welche in der Lage ist, Anforderungsnachrichten zu empfangen und Antwortnachrichten zu senden, die sich auf die Authentifizierung, die Autorisierung und die Abrechnung von Teilnehmern elektronischer Kommunikationsdienste beziehen, **dadurch gekennzeichnet, dass** sie eine Vorrichtung nach Anspruch 9 umfasst.

11. Computerprogramm, **dadurch gekennzeichnet, dass** es Anweisungen zur Durchführung der Schritte des Verfahrens zur Übertragung von Routinginformationen nach Anspruch 1, wenn das Verfahren von einem Prozessor ausgeführt wird, umfasst.

12. Von einer Verwaltungseinrichtung lesbares Aufzeichnungsmedium, auf welchem das Programm nach Anspruch 11 aufgezeichnet ist.

## Claims

1. **Method** for transmitting routing information between a first (DN1) and a second (DN2) node of a plurality of nodes capable of exchanging data relating to the management of subscribers to electronic communication services, the first node and the second node being connected and having exchanged (El, E2) through dedicated messages (CER1, CEA1) their respective management capabilities, the method being **characterized in that** it comprises, when the dedicated messages comprise an information item relating to a routing information discovery capability:
• triggered by a predetermined event, a step (E3, E9) of transmission by the first node, to the second node, of a routing information discovery message (PDR1, PDR3) comprising at least one routing information item included in a routing table (RT1) of the first node and relating to at least one third node.

2. **Method** according to Claim 1, **characterized in that** the trigger event is the connection of the first node (DN1) with the second node (DN2), **in that** the routing information discovery message is a discovery request message, and **in that** the transmission step (E3) is furthermore followed by the following steps:
• a step (E4) of reception by the first node, from the second node, of a discovery response message (PDA1) comprising at least one routing information item included in a routing table (RT2) of the second node,
• a step (E4e) of enrichment of the routing table (RT1) of the first node by the storage of the at least one routing information item received.

3. **Method** according to Claim 1, **characterized in that** the routing information discovery message is a discovery response message and **in that** the trigger event is the reception of a discovery request message from the second node comprising at least one routing information item included in a routing table of the second node, and **in that** the method further comprises:
• a step of enrichment of the routing table of the first node by the storage of the at least one routing information item received.

4. **Method** according to Claim 1, **characterized in that** the trigger event is the enrichment (E7e) of the routing table (RT1) of the first node (DN1) by at least one routing information item received from a fifth node.

5. **Method** according to Claim 1, **characterized in that** the routing information item relating to a node comprises:
• an identifier of the node,
• an identifier of the domain of the node.

6. **Method** according to Claim 5, **characterized in that** the routing information item relating to a node further comprises:
• a list of management capabilities supported by the node,
• a node type, for each management capability supported.

7. **Method** according to one of the preceding claims, **characterized in that** the routing information discovery message comprises a field in XML format comprising the at least one routing information item.

8. **Method** according to Claim 1, **characterized in that** said at least one routing information item included in the routing information discovery message relates to at least one third node to which the first node is connected.

9. **Device** for transmitting routing information between a first (DN1) and a second (DN2) node of a plurality of nodes capable of exchanging data relating to the management of subscribers to electronic communication services, the first node (DN1) and the second node (DN2) being connected and having exchanged through dedicated messages (CER1, CEA1) their respective management capabilities, the device being **characterized in that** it comprises a module (140) for transmission, by the first node (DN1), to the second node (DN2), of a routing information discovery message (PDR1, PDR3) comprising at least one routing information item included in a routing table (RT1) of the first node (DN1) and relating to at least one third node, when the dedicated messages comprise an information item relating to a routing information discovery capability.

10. **Management equipment item** of a telecommunication network, capable of receiving request messages and of transmitting response messages relating to the authentication, the authorization and the accounting of subscribers to electronic communication services, **characterized in that** it comprises a device according to Claim 9.

11. **Computer program, characterized in that** it comprises instructions for the implementation of the steps of the method for transmitting routing information according to Claim 1, when this method is executed by a processor.

12. **Storage medium** that can be read by a management equipment item on which the program according to Claim 11 is stored.
